# EUROPEAN PATENT SPECIFICATION

(11) **EP 2 998 103 B1**
(45) Date of publication and mention of the grant of the patent: **27.02.2019**
(21) Application number: 14185406.7
(22) Date of filing: 18.09.2014
(51) Int. Cl.: B29C 65/08, B29C 65/78, B31B 50/84, B65B 61/18, B65D 5/74

(54) **A unit and a method for applying pre-formed opening devices onto a web of a packaging material**
Einheit und Verfahren zum Aufbringen von vorgeformten Öffnungsvorrichtungen auf einer Bahn aus Verpackungsmaterial
Unité et procédé permettant d'appliquer des dispositifs d'ouverture préformés sur une bande d'un matériau d'emballage

(43) Date of publication of application: 23.03.2016
(73) Proprietor: Tetra Laval Holdings & Finance S.A., 1009 Pully (CH)
(72) Inventor: Abt, Jürgen, 53547 Breitscheid (DE); Polster, Steffen, 65239 Hochheim am Main (DE)
(74) Representative: Tetra Pak - Patent Attorneys SE

(56) References cited:
- WO-A1-2004/085137
- JP-U- S63 149 283

## Description

The present invention relates to a unit for applying pre-formed opening devices onto a web of a packaging material.

The present invention also relates to a method for applying pre-formed opening devices onto a web of a packaging material.

As is known, many pourable food products, such as fruit juice, UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or mineral-filled polypropylene material, and a number of lamination layers of heat-seal plastic material, e.g. polyethylene films, covering both sides of the base layer.

In the case of aseptic packages for long-storage products, such as UHT milk, the packaging material also comprises a layer of gas-barrier material, e.g. aluminium foil or ethyl vinyl alcohol (EVOH) film, which is superimposed on a layer of heat-seal plastic material, and is, in turn, covered with another layer of heat-seal plastic material forming the inner face of the package eventually contacting the food product.

Packages of this sort are normally produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled with the sterilized or sterile-processed food product, and is sealed and subsequently cut along equally spaced cross sections to form pillow packs, which are then folded mechanically to form respective finished, e.g. substantially parallelepiped-shaped, packages.

More precisely, the web is provided with a plurality of holes in a packaging material factory and then fed to the packaging machine.

The web is then wound off from a reel within the packaging machine.

Subsequently, the web is stepwise fed to a unit for applying opening devices on it.

EP-A-2357138, in the name of the same Applicant, discloses a unit for applying opening devices onto respective holes, in particular pre-laminated holes, substantially comprising:
- advancing means for stepwise advancing the web along a first direction; and
- a molding station, which injection moulds a plurality of opening devices onto the web and in correspondence of respective pre-laminated holes of the web.

In particular, the molding station comprises a plurality of first moulds and second moulds.

The first moulds are arranged on a first side of the web, while the second moulds are arranged on a second side, opposite to the first side, of the web.

Each pair of first mould and corresponding second mould is movable between:
- an open configuration, in which they are spaced apart from and therefore not interfering with web; and
- a closed configuration, in which they cooperate with respective first and second side of the web and define a closed molding cavity into which the molding material is injected to mold the respective opening devices.

Still more precisely, when first moulds and the corresponding second moulds are in the open configuration, the web advances.

When the web stops, each pair of first mould and corresponding second mould are aligned with a respective hole in the web.

At this stage, each pair of first mould and second mould move from the open configuration to the closed configuration and the molding material is injected into the molding cavity and solidifies to mold the opening device.

The amount of time required by the moulding material to solidify determines the amount of time for which the web of packaging material stops with the holes aligned with the respective first and second moulds set in the closed configuration.

As a result, the amount of time required by the moulding material to solidify determines the output rate of the whole packaging machine.

A need is felt within the industry to reduce as far as possible the amount of time for which the web stops during the application of the opening device, so as to correspondingly increase the output rate of the packaging machine.

It is an object of the present invention to provide a unit for applying at least one pre-formed opening device onto a hole of a web of a packaging material, designed to meet at least one of the above-identified requirement.

According to the present invention, there is provided a unit for applying at least one pre-formed opening device onto a hole of a web of a packaging material, designed to meet at least one of the above-identified requirement, as claimed in Claim 1.

The present invention also relates to a method for applying at least one pre-formed opening device onto a hole of a web of a packaging material, as claimed in claim 12.

Document WO 2004/085137 A1 discloses a unit according to the preamble of claim 1 as well as a method according to the preamble of claim 12.

A preferred, non-limiting embodiment of the present invention will be described by way of example with reference to the accompanying drawings, in which:
Figure 1 is a perspective view of the unit for applying pre-formed opening device onto a hole of a web of a packaging material, in accordance with the present invention;
Figure 2 is a perspective view of a station of the unit of Figure 1, with parts removed for clarity;
Figure 3 is a section taken along line III-III of Figure 2;
Figures 4 to 9 show in the same section of Figure 3 subsequent operative steps of the station unit of Figure 2;
Figure 10 is a partial section in a larger scale of a sonotrode of the station unit of Figures 3 to 9;
Figure 11 is a partial section in a still larger scale of the sonotrode of Figure 10, with parts removed for clarity;
Figure 12 shows some components of the sonotrode of Figures 10 and 11, with parts removed for clarity;
Figure 13 shows in a further enlarged scale the components of Figure 12; and
Figures 14 and 15 show further components of the unit of Figure 1.

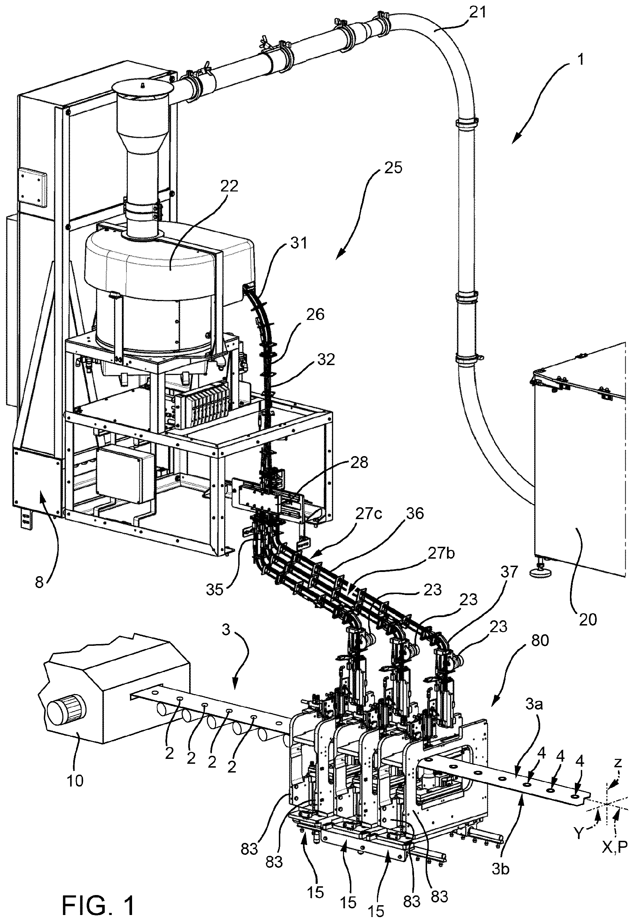

Number 1 in Figure 1 indicates as a whole a unit for applying a plurality of pre-formed opening devices 4 onto respective holes 2 of a web 3 of a packaging material.

It is important to point out that pre-formed opening devices 4 are formed upstream of unit 1 in a not-shown station and before their application on web 3.

In the embodiment shown, holes 2 are through.

Holes 2 are, in the embodiment shown, circular, aligned and equi-spaced along a direction X.

Web 3 is made of a heat-seal sheet material, which comprises a layer of paper material covered on both sides with layers of heat-seal plastic material, e.g. polyethylene. In the case of an aseptic package for long-storage products, such as UHT milk, the packaging material comprises a layer of oxygen-barrier material, e.g. aluminium foil, which is superimposed on one or more layers of heat-seal plastic material eventually forming the inner face of package contacting the food product.

Packaging material is intended to form a plurality of packages, which preferably contain a pourable food product, such as pasteurized or UHT milk, fruit juice, wine, etc.

Packages may also contain a food product, which is pourable within a tube of packaging material when producing packages, and sets after packages are sealed. One example of such a food product is a portion of cheese, which is melted when producing packages and sets after packages are sealed.

The tube is formed in known manner downstream from unit 1 by longitudinally folding and sealing web 3.

The tube of packaging material is then filled with the food product for packaging, and is sealed and cut along equally spaced cross sections to form a number of pillow packs (not shown), which are then transferred to a folding unit where they are folded mechanically to form respective packages.

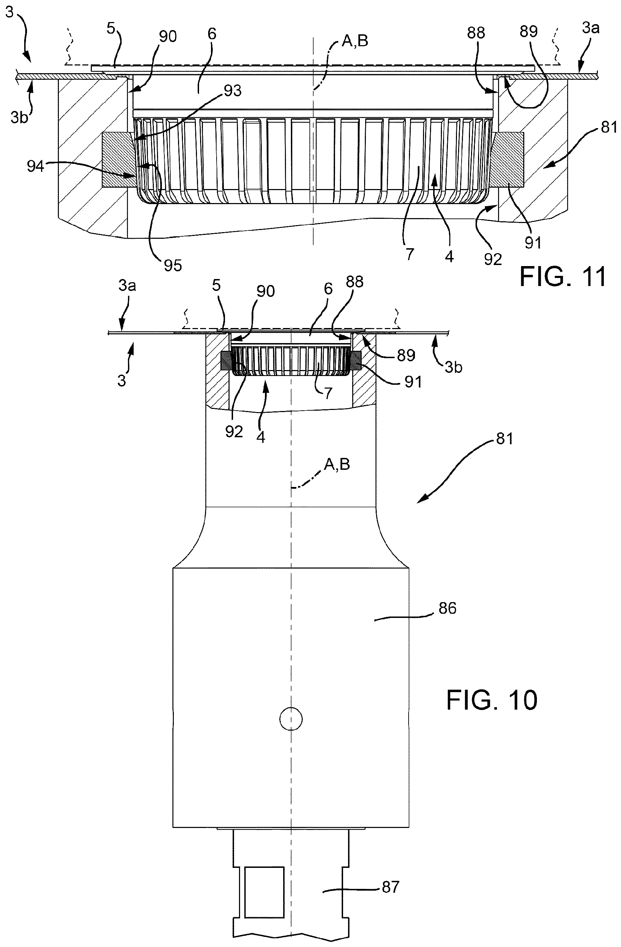

In the embodiment shown, pre-formed opening device 4 (Figures 10 and 11) has an axis A and substantially comprises:
- a flange 5; and
- a neck 6 protruding from flange 5 along axis A; and
- a cap 7 screwed on neck 6.

In particular, the diameter of flange 5 is larger than the diameter of neck 6.

Pre-formed opening device 4 is preferably made of polyethylene.

The diameter of hole 2 is smaller than the diameter of flange 5 and larger than the diameter of neck 6.

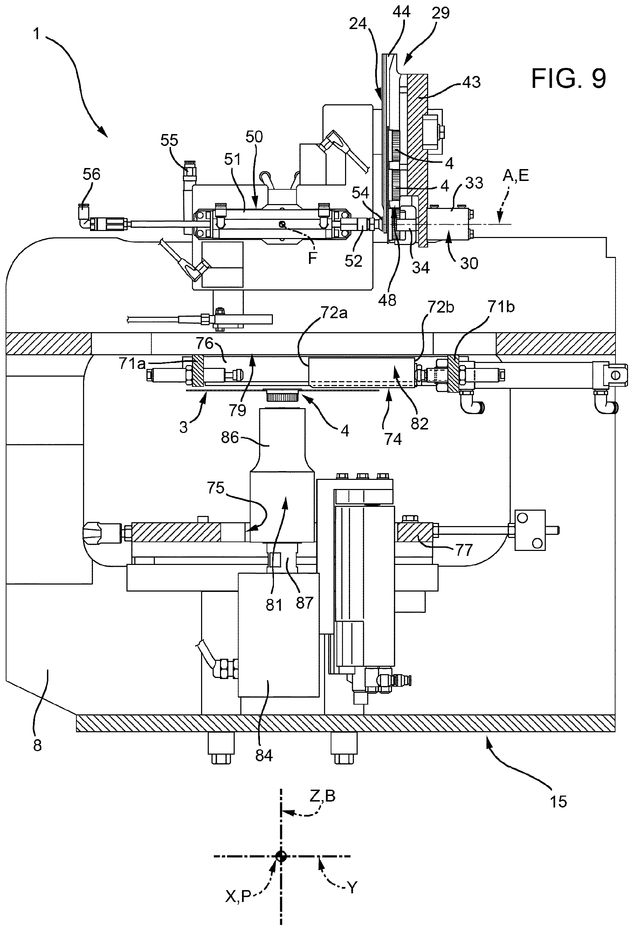

Once applied by unit 1, flange 5 (Figures 9 and 10) contacts a side 3a of web 3, neck 6 passes through hole 2 and cap 7 is arranged on a side 3b, opposite to side 3a, of web 3.

It is also possible to define (Figures 1 to 9):
- a direction Y, which is orthogonal to direction X and lies on the plane of web 3; and
- a direction Z, which is orthogonal to the plane of web 3.

Directions X, Y are, in the embodiment shown, horizontal.

Direction Z is, in the embodiment shown, vertical.

Advantageously, unit 1 comprises (Figure 1):
- a motor 10 for advancing web 3 along a path P parallel to direction X; and
- a plurality of application stations 15, three in the embodiment shown, which are fed with respective queues of pre-formed opening devices 4 and which apply pre-formed opening devices 4 on respective holes 2 of web 3.

In greater detail, motor 10 is controllable for step-wise advancing web 3 along direction X.

Still more precisely, web 3 stops during the application of pre-formed opening devices 4 onto respective holes 2 and advances before and after that application.

Furthermore, stations 15 are aligned and equi-spaced along direction X.

Stations 15 are, in the embodiment shown, three.

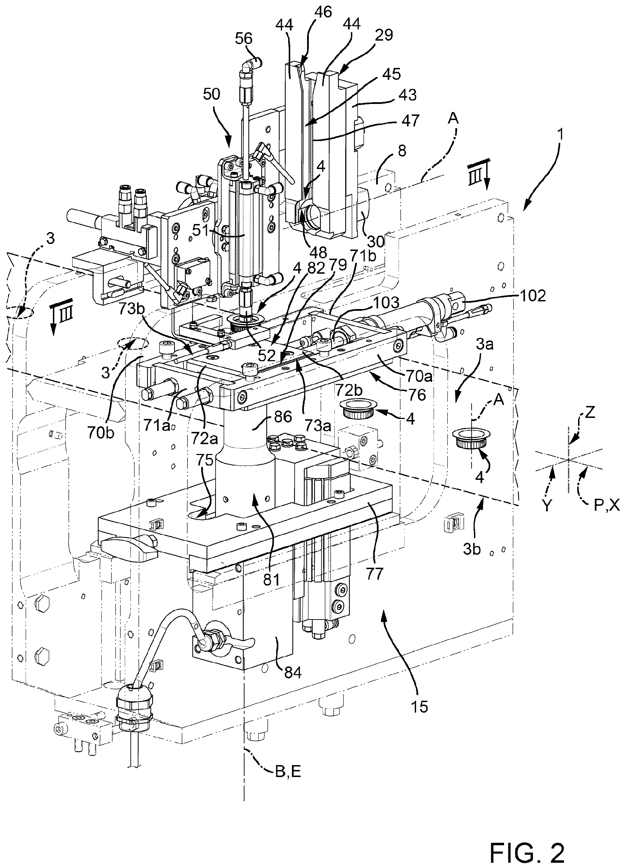

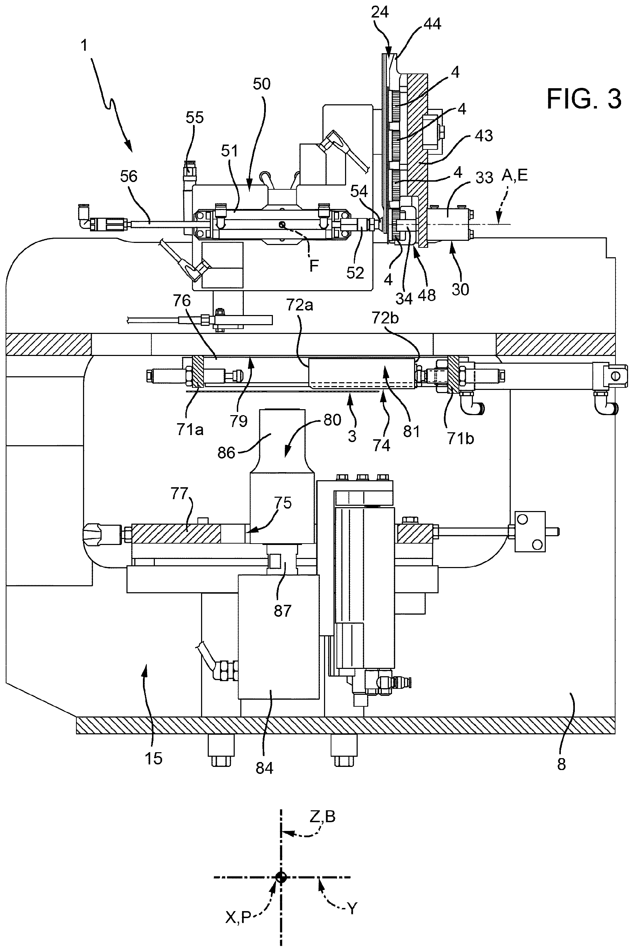

Unit 1 also comprises (Figure 1):
- a frame 8;
- a bin 20 which contains pre-formed opening devices 4;
- a feeding device 25, which is fed with pre-formed opening devices 4 and which forms a plurality of queues 24 (Figures 3 to 9), three in the embodiment shown, of pre-formed opening device 4 to be fed to respective stations 15; and
- a plurality of positioning devices 50 (Figures 2 to 9), three in the embodiment shown, which are associated to respective stations 15, and withdraw, one after the other, the lowermost pre-formed opening devices 4 from respective queues 24 and applies lowermost pre-formed opening devices 4 in respective holes 2 of web 3.

In greater detail, feeding device 25 comprises, proceeding according the advancing direction of pre-formed opening devices 4 and from bin 20:
- an elevator 21, which withdraws pre-formed opening devices 4 from bin 20 and is pneumatically operated, in the embodiment shown;
- a hopper 22; and
- an upper chute 26, which is fed by hopper 22 with pre-formed opening devices 4.

Elevator 21, hopper 22 and upper chute 26 are common to all stations 15.

Chute 26 comprises, proceeding from hopper 22 towards a sledge 28, (Figure 1):
- a curved stretch 31 in connection with hopper 22; and
- a substantially vertical stretch 32.

Furthermore, feeding device 25 comprises for each station 15 and proceeding from chute 26 according the advancing direction of pre-formed opening devices 4:
- a plurality, three in the embodiment shown, of lower chutes 27a, 27b, 27c;
- a plurality, three in the embodiment shown, of sequencing devices 23 associated with respective lower chutes 27a, 27b, 27c;
- a plurality, three in the embodiment shown, of elements 29 associated with respective lower chutes 27a, 27b, 27c and sequencing devices 23, and which form respective queues 24 and feed respective stations 15; and
- a plurality, three in the embodiment shown, of expulsing device 30 for easing the transfer of the lowermost pre-formed opening devices 4 of respective queues 24 to respective positioning devices 50.

In particular, pre-formed opening devices 4 move under gravity action from hopper 22 to elements 29.

Each chute 27a, 27b, 27c substantially comprises, proceeding from sledge 28 towards respective elements 29, (Figure 1):
- a stretch 35, substantially vertical and which is selectively in connection with chute 26;
- a curved stretch 36; and
- a stretch 37, which is substantially vertical.

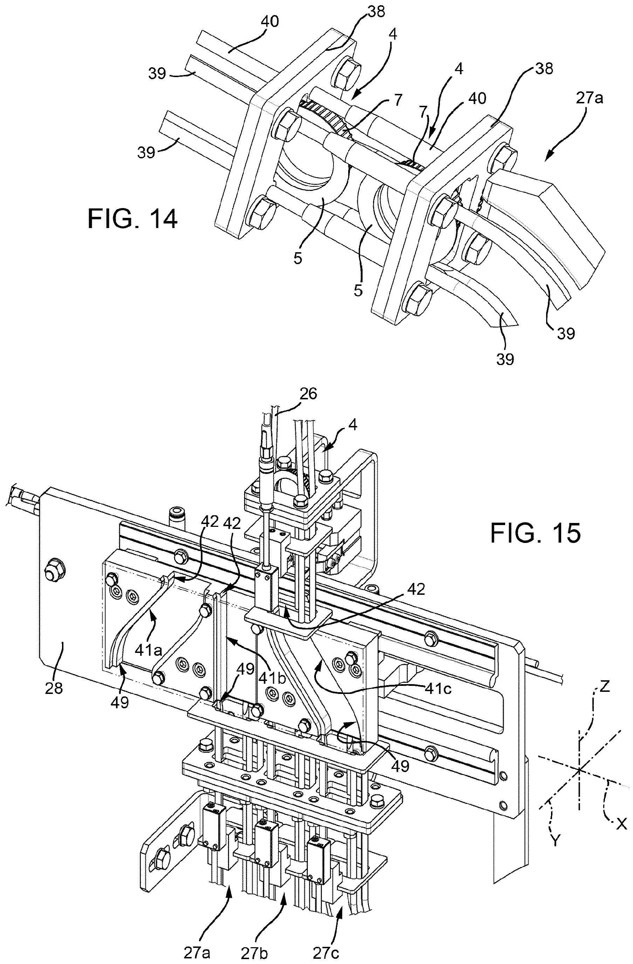

With reference to Figure 14, chutes 26 and stretch 35, 36, 37 of chutes 27a, 27b, 27c comprise:
- a pair of rails 39 parallel to each other, onto which flanges 5 of pre-formed opening devices 4 slide; and
- a pair of rails 40 parallel to each other and opposite to rails 39, and onto which caps 7 slide.

Rails 39, 40 are parallel to each other and are spaced along direction Y.

Chutes 26 and stretch 35, 36, 37 of chutes 27a, 27b, 27c further comprise a plurality of equi-spaced flanges 38 interposed orthogonally with respect to rails 39, 40.

Each sequencing device 23 is interposed between stretch 37 of a respective lower chute 27a, 27b, 27c and a respective element 29 and is adapted to selectively stop the pre-formed opening devices 4 gathered in respective lower chute 27a, 27b, 27c or to allow one pre-formed opening device 4 after the other to fall under gravity action into respective element 29 to form respective queue 24.

In the embodiment shown, each sequencing device 23 is movable parallel to direction Y between:
- a first position, in which it prevents pre-formed opening devices 4 from falling; and
- a second position, in which it allows one pre-formed opening device 4 to fall from respective lower chute 27a, 27b, 27c inside respective element 29.

In particular, each sequencing device 23 is shaped as a roll having an axis parallel to direction Y.

Elements 29 extend parallel to direction Z and are spaced from each other along direction X.

Queues 24 are aligned parallel to direction Z and are spaced from each other along direction X.

When forming queue 24, pre-formed opening devices 4 have respective flange 5 on the side of positioning device 50 and respective cap 7 on the opposite side, proceeding along direction Y, in particular on the side of respective expulsing device 30.

Each element 29 defines a passage 45, which extends parallel to direction Z.

Pre-formed opening devices 4 enter passage 45 of each element 29 with a movement parallel to direction Z, form queue 24, and exits passage 45 parallel to direction Y and on one the side of web 3 and stations 15.

Passage 45 of each element 29 substantially comprises (Figures 2 to 9):
- an inlet 46, which is open parallel to direction Z and converge with reference to the advancing direction of pre-formed opening devices 4;
- a main portion 47; and
- an outlet 48, which is closed on the opposite side of inlet 46 with respect to direction Z and is open on the side of positioning device 50 with respect to direction Y.

Outlet 48 of each passage 45 is aligned with respective expulsing device 30 and with axis A of the lowermost pre-formed opening device 4.

Each element 29 comprises:
- a plate 43, onto which cap 7 slides; and
- a pair of arms 44, which extend parallel to one another and substantially parallel to direction Z.

Plate 43 and arms 44 are opposite to each other along direction Y. Arms 44 are opposite to each other along direction X.

Expulsing devices 30 are arranged on the opposite side of positioning devices 50 with respect to respective passages 45 of elements 29.

Each expulsing device 30 comprises (Figures 3 to 9):
- a housing 33 fixed to frame of unit 1; and
- a stem 34 coming out from housing, movable along direction Y with respect to housing 33 and passing through plate 43 substantially in correspondence of outlet 48.

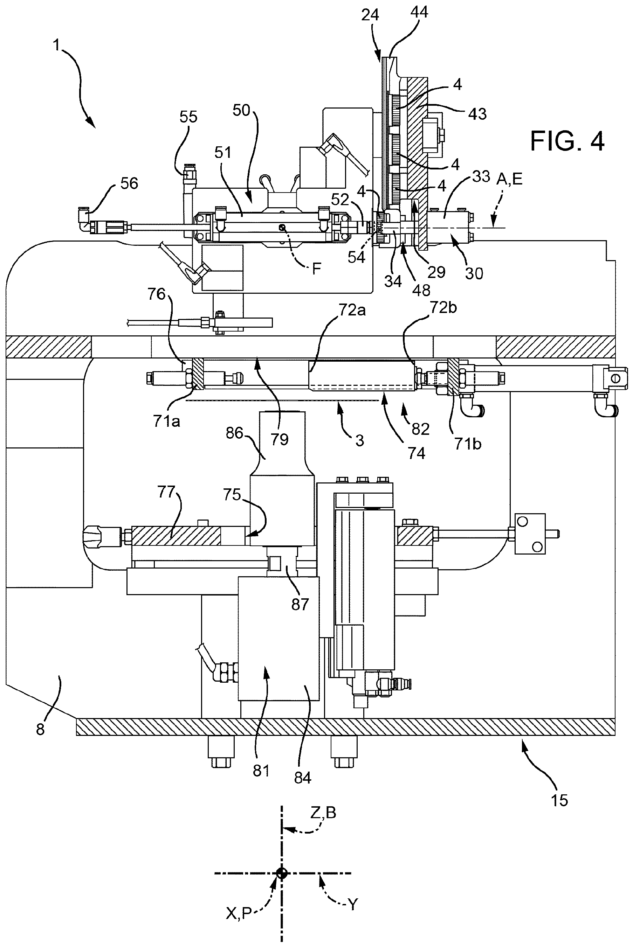

Stem 34 can reciprocate along direction Y between:
- a rest retracted position (Figures 3, 5, 6, 7, 8, 9), in which it is arranged on the opposite side of positioning device 50 with respect to passage 45; and
- an operative extended position (Figure 4), in which it cooperates with the cap 7 of lowermost pre-formed opening device 4 of queue 24 and expels it away from outlet 48 of passage 45 on the side of positioning device 50.

Sledge 28 (Figures 1 and 15) is interposed between chute 26 and chutes 27a, 27b, 27c and selectively connects chute 26 with one of chutes 27a, 27b, 27c.

Sledge 28 comprises (Figure 15) a plate lying in a plane, vertical in use, and movable parallel to direction X.

Sledge 28 also comprises a plurality of channels 41a, 41b, 41c which extends orthogonal to direction X and comprise, each, a top end 42 and a bottom end 49.

Sledge 28 is moved, by a pneumatic system in the embodiment shown, in three different positions along direction X.

Feeding device 25 also comprises a not-shown sensor for detecting the position of sledge 28 along direction X.

In particular, for each position of sledge 28, end 42 of channel 41a (41b, 41c) is in connection with chute 26 and end 49 of same channel 41a (41b, 41c) is in connection with chute 27a (27b, 27c).

In the embodiment shown, channel 41b is substantially vertical and channels 41a, 41c diverge from channel 41b, proceeding from respective ends 42 towards corresponding ends 49.

In the following of the present description, only one application station 15 and one positioning device 50 will be described, being all the application stations 15 and positioning devices 50 identical to each other.

Positioning device 50 comprises (Figures 3 to 9):
- a housing 51, which is hinged to a frame of unit 1 about an axis F parallel to direction X; and
- a piston 52, which can slide relative to housing 51 along an axis E.

Axes E, F are, in the embodiment shown, orthogonal to one another.

Piston 52 of each positioning device 50 comprises a suction end 54, which is arranged outside piston 52.

End 54 is, in the embodiment shown, cup-shaped and is adapted to grip, by vacuum action, lowermost pre-formed opening device 4 of respective queues 24 at respective outlet 48.

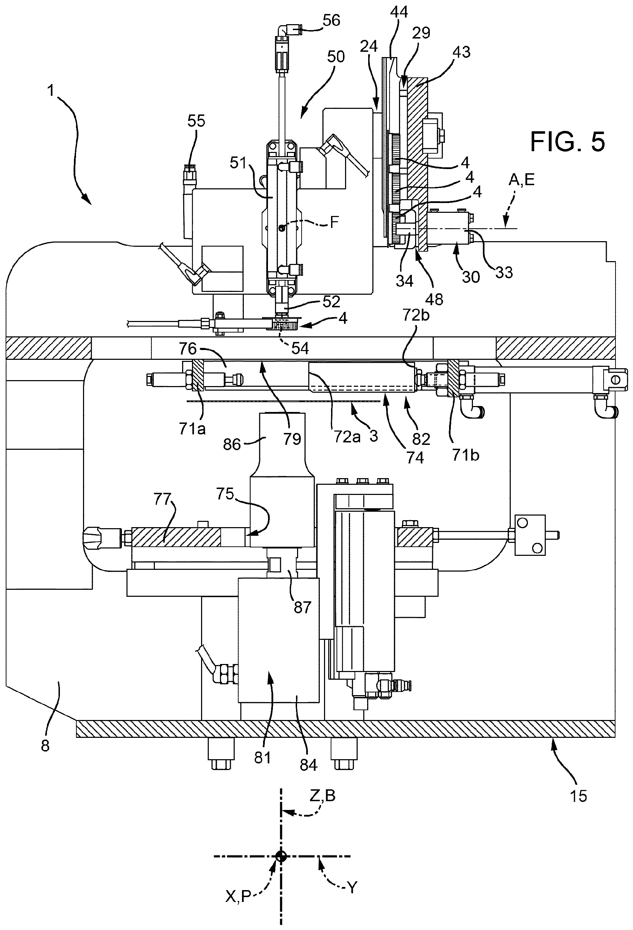

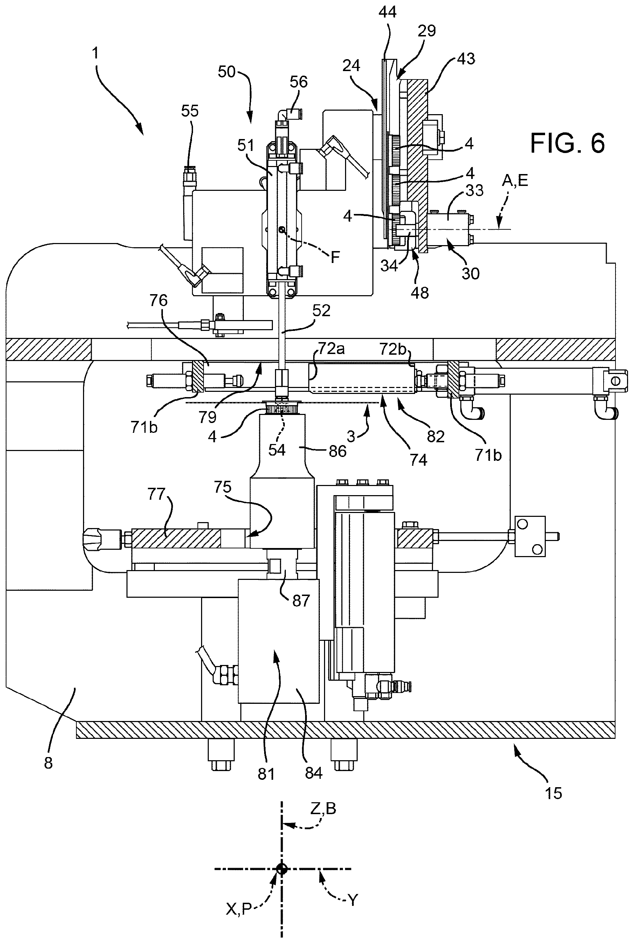

In greater detail, housing 51 can reciprocate with respect to frame between:
- a withdraw position (shown in Figure 3, 4 and 7 to 9) in which axis E extends parallel to direction Y; and
- a positioning position (shown in Figures 5 and 6), in which axis E extends parallel to direction Z and is arranged over side 3a of web 3.

In the embodiment shown, housing 51 and axis E of piston 52 are vertical in the positioning position and horizontal in the withdraw position.

Piston 52 may move relative to housing 51 parallel to axis E thereof between:
- a retracted position (shown in Figures 4 and 5), in which end 54 is at a minimum distance from housing 51;
- a fully extended position (shown in Figure 6), in which end 54 is at a maximum distance from housing 51; and
- a partially extended position (shown in Figure 3, 7, 8, 9), in which end 54 is at an intermediate distance between the minimum distance and the maximum distance.

In particular, when housing 51 is in the withdraw position, piston 52 is moved from:
- the partially extended position (Figure 3), in which end 54 contacts and sucks flange 5 of lowermost pre-formed opening device 4 of respective queue 24 and exerts a suction action thereon; to
- the retracted position (Figure 4), in which end 54 has withdrawn lowermost pre-formed opening device 4 from respective queue 24 of respective element 29 and keeps it at a certain distance from outlet 48.

At this stage, housing 51 is rotated of 90 degrees up to reach the positioning position (Figure 5) and the piston 52 is moved from:
- the retracted position, in which end 54 and relative pre-formed opening device 4 are arranged at a given distance along direction Z from web 3; to
- the fully extended position (Figure 6), in which pre-formed opening device 4 is inserted on respective hole 2 of web 3.

The movement of housing 51 between the withdraw position and the positioning position, and the movement of piston 52 between the retracted position, the partially extended position and the fully extended position is synchronized with the movement of web 3 along path P and with the movement of expulsing device 30 between the respective rest position and operative position.

In particular, when web 3 advances and housing 51 is in the withdraw position and piston 52 is in the partially extended position (Figure 4), expulsing device 30 moves from the rest position to the operative position, so as to ease end 54 to suck lowermost pre-formed opening device 4.

Furthermore, when web 3 is stopped, housing 51 is in the positioning position, piston 52 is in the retracted position (Figure 5).

Then, with web 3 stopped, piston 52 moved in the fully extended position and inserts pre-formed opening device 4 in hole 2 (Figure 6).

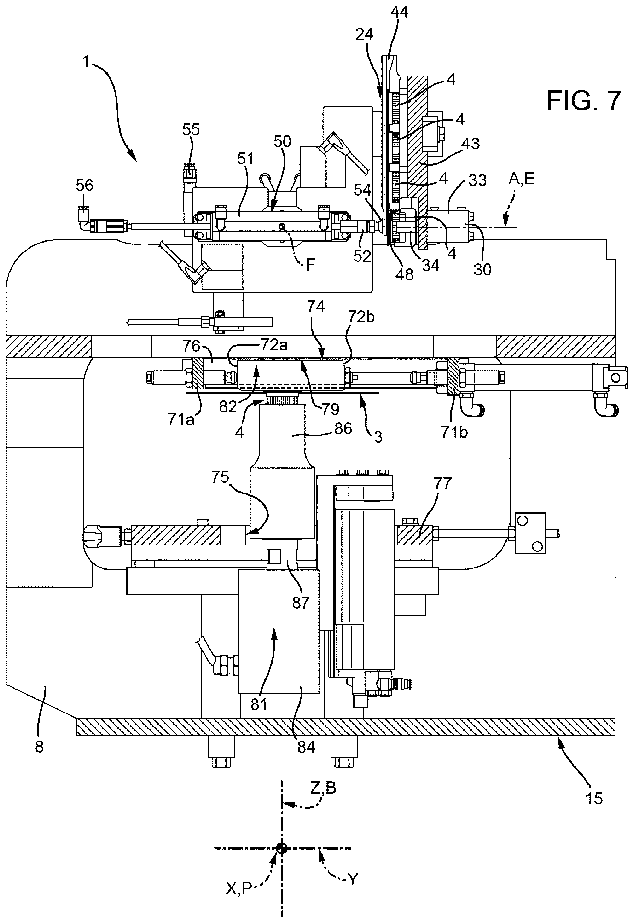

Once pre-formed opening device 4 is inserted in hole 2, piston 52 moves back in the partially extended position and housing 51 moves back in the withdraw position, as shown in Figure 7.

Unit 1 comprises:
- an actuator 55 for causing the reciprocating movement of housing 51; and
- an actuator 56 for causing the sliding of piston 52 with respect to housing 51.

In the embodiment shown, actuator 56 is pneumatically operated.

Application station 15 comprises (Figure 2):
- a frame 80;
- a sonotrode 81 arranged on side 3b of web 3; and
- an anvil 82 arranged on side 3a of web 3.

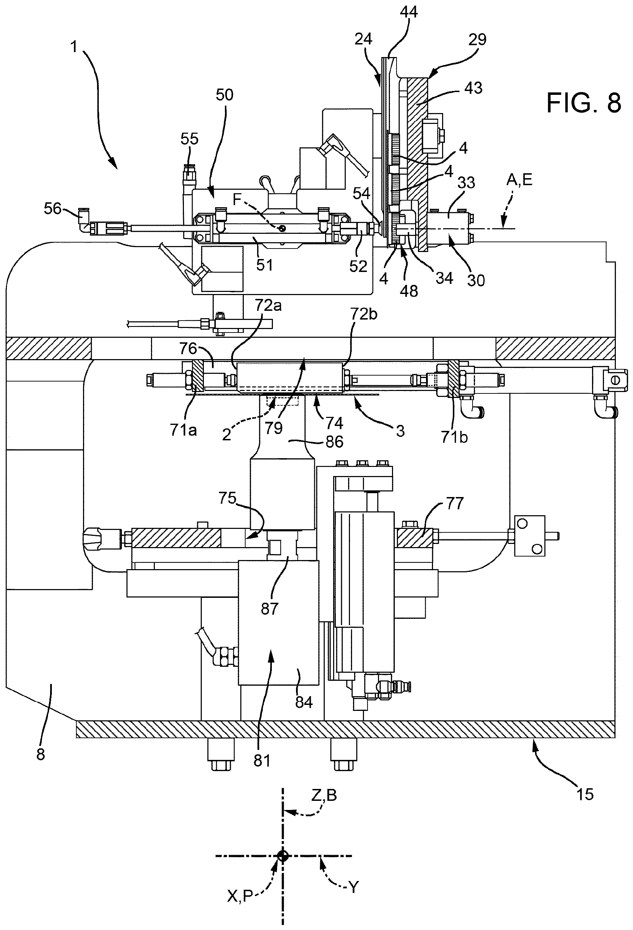

Sonotrode 81 can reciprocate along an axis B parallel to direction Z between:
- a rest position (shown in Figures 3, 4, 5, 9), in which it is spaced apart from side 3b of web 3; and
- an operative position (shown in Figure 8), in which it seals pre-formed opening device 4 - which engages hole 2 - to web 3.

Anvil 82 can reciprocate along direction Y between:
- a rest position (shown in Figures 3 to 6), in which it leaves free a passage 79 for piston 52 of positioning device 50, when piston 52 moves from the partially extended position to the fully extended position; and
- an operative position (shown in Figures 1, 2, and 7 to 9), in which obstructs passage 79 and exerts a counter-pressure on flange 5 of pre-formed opening device 4 inserted inside hole 2, during the sealing of pre-formed opening device 4 to web 3.

In particular, sonotrode 81 and anvil 82 are arranged at the same time in the respective operative position, during the sealing of pre-formed opening device 4 to web 3.

In the embodiment shown, anvil 82 is shaped as a plate.

In particular, anvil 82 comprises (Figure 2):
- a pair of sides 72a, 72b, which extend along direction X and are spaced from one another along direction Y;
- a pair of sides 73a, 73b, which extend along direction Y and are spaced from one another along direction X;
- a top surface and a bottom surface 74, which are opposite to each other along direction Z.

Side 73a is arranged downstream of side 73b, proceeding according the advancing direction of web 3 along path P.

Frame 80 substantially comprises:
- a pair of walls 83 which extend parallel to direction Z and orthogonally to direction X; and
- a pair of upper and lower crossbars 76, 77 which extend orthogonal to direction Z, and are contained between walls 83.

Upper crossbar 76 comprises a pair of rod 70a, 70b parallel to direction X and a pair of rods 71a, 71b parallel to direction Y.

Rod 70b is arranged upstream of rod 70a, with reference to the advancing sense of web 3 along path P.

Side 72a is arranged on the side of rod 71a and side 72b is arranged on the side of rod 71b.

Passage 79 is defined along direction X by rods 70a, 70b and along direction Y by side 72a of anvil 82 and rod 71a.

When anvil 82 is in the operative position, side 72a contacts rod 71a and surface 74 contacts flange 5 of pre-formed opening device 4 inserted in hole 2.

Accordingly, anvil 82, when in the operative position, obstructs passage 79.

When anvil 82 is in the rest position, side 72b contacts rod 71b and side 72a is spaced from rod 71a along direction Y.

Accordingly, anvil 82 leaves free passage 79, through which piston 52 of positioning device 50 can pass, when moving from the retracted position to the fully extended position.

Furthermore, surface 74 of anvil 82, when in the rest position, is spaced apart from web 3 along direction Z.

Crossbar 77 defines an opening 75 parallel to direction Z and aligned, with respect to direction Z, with hole 2 of web 3 arrested and with passage 79.

Sonotrode 81 comprises (Figures 10 and 11):
- a body 84;
- a head 86 opposite to body 84 with respect to direction Z and extending about an axis B parallel to direction Z; and
- a connection 87 interposed between head 86 and body 84 and which engages opening 75 of lower crossbar 76.

With reference to Figures 10 and 11, head 86 defines, on the opposite side of body 84 and towards side 3b of web 3, a sealing surface 89 and an opening 88.

Furthermore, head 86 defines a cavity 90, which is axially bounded towards side 3b by surface 89.

Cavity 90 extends about axis B, which coincides with axis A when pre-formed opening device 4 is inserted in cavity 90.

Head 86 is connected, according to a known solution, to a drive unit (not shown).

Drive unit is formed by a stack of alternate piezoelectric ceramic plates and conductive metal sheets and is coupled to an alternate current generator. In this way, the piezoelectric ceramic plates convert the electric power supplied by the alternate current generator into a mechanical strain, which causes the oscillation of head 86 and, therefore, the sealing of flange 5 to web 3.

Cavity 90 receives pre-formed opening device 4, when the latter is inserted in hole 2 by positioning device 50.

In particular, cavity 90 is bounded by a wall 92 annularly with respect to axis B and by opening 88 axially with respect to axis B.

Head 86 further comprises a ring 91 which is fitted to wall 92 and protrudes inside cavity 90.

Ring 91 is radially bounded, on the side of axis B, by a wall 95 which tapers, proceeding from opening 88 towards the opposite side of side 3b of web 3, when ring 91 is not deformed.

In particular, wall 92 converges towards axis B, proceeding from opening 88 towards the opposite side of side 3b of web 3.

Ring 91 cooperates with cap 7 of pre-formed opening device 4 and is adapted to center pre-formed opening device 4 with respect to head 86.

When ring 91 is deformed (see Figures 10 and 11), wall 95 defines, proceeding from opening 88 towards the opposite side of side 3b of web 3:
- a portion 93 angled for a first angle with respect to axis B; and
- a portion 94 angled for a second smaller than first angle with respect to axis B.

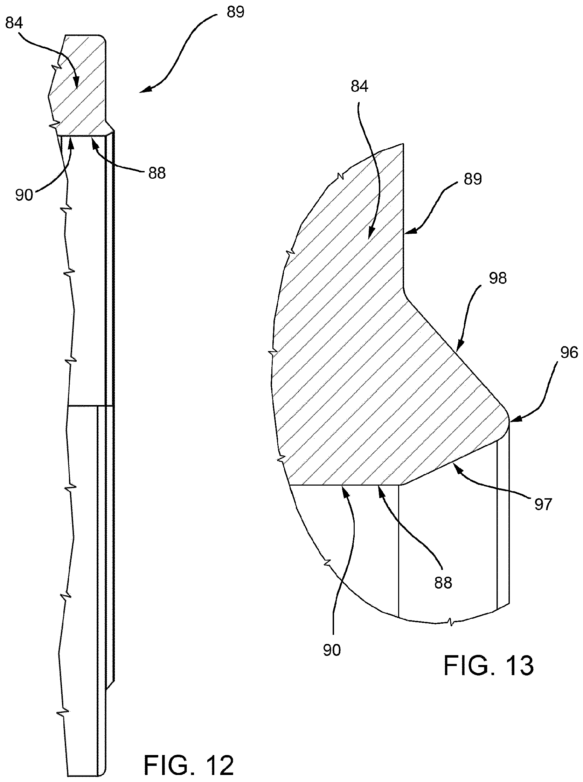

Surface 89 comprises (Figures 12 and 13) an annular protrusion 96, which extends on the opposite axial side of cavity 90 and is adapted to exert a pressure on side 3b of web 3 in the region surrounding hole 2.

In greater detail, protrusion 96 is bounded by two sharply joined walls 97, 98, which extend on the side of opening 88 and on the opposite side of opening 88 respectively.

Ring 91 is, in the embodiment shown, made of elastomeric material, preferably a thermosetting material.

Still more preferably, ring 91 is made of cellular polyurethane elastomer commercially known as cellasto.

In this way, ring 91 is effective to center pre-formed axis A of pre-formed opening device 4 with respect to axis B of opening 88 of sonotrode 81, without transferring the ultrasonic vibration to cap 7.

Station 15 further comprises:
- a motor 102, which is adapted to cause the movement of anvil 82 along direction Y between the rest position and the operative position; and
- a piston 103, which extends parallel to direction Y, has opposite axial ends connected to motor 102 and anvil 82 and reciprocate along direction Y upon the activation of motor 102.

Piston 103 passes through rod 71b of crossbar 76.

Anvil 82 slides onto rods 70a, 70b.

The movement of web 3, positioning device 50, sonotrode 81 and anvil 82 is synchronized.

In particular, when web 3 advances, sonotrode 81 and anvil 82 are both arranged in the respective rest positions (Figures 3 to 6).

Accordingly, when positioning device 50 is arranged in the positioning position, piston 52 moves from the retracted position to the fully extended position and pass through passage 79.

At this point, web 3 stops and piston 52 can thus insert opening device 4 inside hole 2 of web 3.

After piston 52 has inserted pre-formed opening device 4 inside hole 2 and has come back to the partially extended position, sonotrode 81 and anvil 82 move from the respective rest position to the respective operative position.

When sonotrode 81 is arranged in the operative position (Figures 8, 10 and 11), surface 89 abuts against side 3b of web 3 and cap 7 is housed inside cavity 90.

When sonotrode 81 moves from the rest position to the operative position, it slightly thrust pre-formed opening device 4 and web 3 towards anvil 82. During this step, pre-formed opening device 4 remains outside cavity 90, as shown in Figures 7.

When both sonotrode 81 and anvil 82 are in the operative positions, head 86 is activated and pre-formed opening device 4 is sealed to web 3.

After the pre-formed opening device 4 has been sealed to web 3, the latter advances again.

In use, motor 10 stepwise advances and arrests web 3 with holes 2 along path P and parallel to direction X.

The operation of unit 1 is hereinafter described with reference to only one pre-formed opening device 4, to the corresponding only one element 29, only one positioning device 50, and only one station 15.

In greater detail, elevator 21 sucks pre-formed opening device 4 from bin 20 and transfers opening device to hopper 22.

Pre-formed opening device 4 then moves, under gravity action along chute 26 and depending on the position of sledge 28 along direction X, on one chute 27a, 27b, 27c.

Pre-formed opening device 4 is arrested by sequencing device 23 inside stretch 37 of relative chute 27a, 27b, 27c and subsequently allowed to fall, under gravity action, inside element 29 to form queue 24.

In particular, when pre-formed opening device 4 falls inside passage 45, axis A is parallel to direction Y.

When pre-formed opening device 4 is the lowermost of queue 24, it is arranged at outlet 48 of passage 45

Flange 5 of the lowermost opening device 4 of queue 24 faces positioning device 50 and is on the opposite side of expulsing device 30, proceeding along direction Y.

Cap 7 of the lowermost opening device 4 of queue 24 faces stem 34 of expulsing device 30 and is on the opposite side of positioning device 50, proceeding along direction Y.

The operation of unit 1 is hereinafter described, starting from a condition (shown in Figure 3), in which stem 34 of expulsing device 30 is in the rest position, housing 51 is in the withdraw position (i.e. horizontal) and piston 52 is in the partially extended position.

Furthermore, in this condition, sonotrode 81 and anvil 82 are in respective rest positions, in which they are spaced apart from respective sides 3a, 3b of web 3 and in which anvil 82 leaves free passage 79.

In particular, motor 10 advances web 3 along path P.

End 54 contacts flange 5 of pre-formed opening device 4 and exerts a suction action on flange 5.

At this stage, as shown in Figure 4, stem 34 of expulsing device 30 moves from the operative extended position and piston 52 moves in the retraced position, in which end 54 and sucked pre-formed opening device 4 are spaced apart from outlet 48 along direction Y.

In this way, expulsing device 30 eases end 54 of positioning device 50 to withdraw pre-formed opening device 4.

Housing 51 of positioning device 50 is rotated about axis F from the withdraw position to the positioning position, in which housing 51 and piston 52 are aligned with passage 79 and sonotrode 81 (Figure 5). Piston 52 remains in the partially extended position and end 54 grips, by vacuum action, flange 5 of pre-formed opening device 4.

Motor 10 then stops web 3 in such a position that hole 2 is aligned parallel to direction Z with axis B of sonotrode 81, axis F of piston 52 and axis A of pre-formed opening device 4 gripped by end 54 of piston 52.

At this stage (Figure 6), actuator 56 causes the movement of piston 52 along axis E parallel to direction Z, from the retracted position to the fully extended position.

As a result, piston 52 together with pre-formed opening device 4 passes through passage 79 and inserts pre-formed opening device 4 into hole 2.

Afterwards, as shown in Figure 7, piston 52 returns back in the partially extended position and housing 51 rotates about axis F up to when it comes back in the withdraw position. Accordingly, positioning device 50 is again parallel to direction Y and end 54 is now in contact with flange 5 of a new lowermost pre-formed opening device 4 of queue 24.

Furthermore, motor 102 causes the movement of anvil 82 along direction Y from the rest position to the operative position.

In the operative position, anvil 82 obstructs passage 79 and cooperates with flange 5 of opening device.

At the same time, sonotrode 81 is moving from the rest position to the operative position.

As a result of the movement of sonotrode 81, sealing surface 89 contacts cap 7 of pre-formed opening device 4.

The further movement of sonotrode 81 towards the operative position upwardly thrusts pre-formed opening device 4 and web 3 towards anvil 82 and parallel to direction Z.

As a result, neck 6 and cap 7 of pre-formed opening device 4 enters cavity 90, cap 7 cooperates with wall 92 of ring 91 and sealing surface 89 contacts side 3b of web 3.

Still more precisely, cap 7 deforms wall 92 of ring 91, so as to create portion 93, 94 (Figures 13 and 14) differently angled with respect to axis B of head 86 of sonotrode 81.

In this way, ring 91 effectively centers axis A of pre-formed opening device 4 with axis B of head 86.

At this stage, sonotrode 81 is activated and head 86 oscillates, so as to seal pre-formed opening device 4 to web 3 at hole 2.

Once the sealing has been completed, sonotrode 81 and anvil 82 comes back in respective rest position, as shown in Figure 9.

Motor 10 advances again web 3, so as to arrange a new hole 2 under station 15 and the cycle of unit 1 is repeated as of the configuration of Figure 2.

The advantages of unit 1 and of the method according to the present invention will be clear from the foregoing description.

In particular, stations 15 seals pre-formed opening devices 4 to web 3 at respective holes 2.

In this way, stations 15 do not form pre-formed opening devices 4 when they seals them on web 3, differently from the known solution described in the introductory part of the present invention.

As a result, the amount of time required to seal pre-formed opening devices 4 to web 3 no longer depends on the amount of time required for forming pre-formed opening devices 4, e.g. for solidifying the moulding material in case of injection mould pre-formed opening device 4.

Accordingly, the rate of application of pre-formed opening devices 4 to web 3 is increased with respect to the known solution.

Protrusions 96 of sonotrodes 81 are effective in pressing melted polyethylene of pre-formed opening devices 4 into holes 2 of web 3. According, the melted polyethylene covers the paper material of web 3 that has been exposed, as a result of the formation of holes 2.

In this way, the paper material of holes 2 is protected by the melted polyethylene, when web 3 is advanced inside the bath of hydrogen peroxide solution with water at more than 80 centigrade degrees, the risk that water soaks the paper material is dramatically reduced.

Furthermore, ring 91 made in elastomeric material is efficient in centering pre-formed opening devices 4 inside cavities 90 of respective sonotrodes 81, without transferring the ultrasonic vibration to caps 7 and, therefore, without affecting the sealing of pre-formed opening devices 4 to web 3.

Ring 91 is conical and tapers on the opposite side of web 3.

In this way, the contact area between rings 91 and relative caps 7 is particularly small.

Finally, positioning device 50 is used for both withdrawing pre-formed opening devices 4 from outlet 48 of element 29 and for inserting pre-formed opening devices 4 inside respective holes 2 of web 3.

Clearly, changes may be made to unit 1 and to the method without, however, departing from the protective scope defined in the accompanying Claims.

Furthermore, sonotrode 80 could be used for sealing an opening device to an open package before the package is closed by a further sealing.

## Claims

1. A unit (1) for applying at least one pre-formed opening device (4) onto a hole (2) of a web (3) of a packaging material comprising:
- advancing means (10) for advancing said web (3) along a path (P); and
- at least one application station (15), which is fed, in use, with said pre-formed opening device (4) and seals, in use, said pre-formed opening device (4) on said hole (2) of said web (3) of packaging material, said application station (15) comprising
o a sonotrode (81) which can be activated to cause the sealing of said pre-formed opening device (4) to said web (3) of packaging material; and
o an anvil (82), which is adapted to co-operate with said pre-formed opening device (4), on the opposite side of said sonotrode (81) with respect to said web (3), during the sealing of said pre-formed opening device (4) to said web (3),
**characterized in that**
- said sonotrode (81) is movable along a first direction (Z) between
∘ a first rest position, in which it is spaced apart from said web (3); and
∘ a first operative position, in which it cooperates with a first side (3b) of said web (3) at said hole (2), and in which it is activated to cause the sealing of said pre-formed opening device (4);
- said anvil (82) is movable along a second direction (Y) transversal to said first direction (Z) between
∘ a second rest position, in which it is spaced apart from said web (3); and
∘ a second operative position, in which it exerts a counter-pressure against a second side (3a), opposite to said first side (3b), of said web (3) at said hole (2);
and
- said sonotrode (81) and said anvil (82) are arranged, in use, at the same time, in respective said second operative positions, so as to seal said pre-formed opening device (4) to said web (3).

2. The unit of claim 1, **characterized in that** said first direction (Z) and second direction (Y) are transversal to each other and to said path (P).

3. The unit of claim 1 or 2, **characterized in that** said anvil (82), when arranged in said second operative position, cooperates, in use, with a flange (5) of said pre-formed device (4); and **in that** said sonotrode (81) comprises an end cavity (90) for receiving, in use, a neck portion (6) of said pre-formed opening device (4) when said sonotrode (81) is in respective said operative position;
said neck portion (6) protruding from said flange (5) and passing, in use, through said hole (2) of said web (3);
said cavity (90) being open towards said web (3) and being bound by an opening (88).

4. The unit of claim 3, **characterized in that** said sonotrode (81) comprises a ring (91) of elastomeric material, partially protruding in said cavity (90), and adapted to cooperate with said neck portion (6) of said pre-formed opening device (4), so as to center a first axis (A) of said pre-formed opening device (4) with respect to a second axis (B) of said cavity (90).

5. The unit of claim 4, **characterized in that** said ring (91) comprises, on the side of said second axis (B), a wall (92) which tapers on the opposite side of said opening (88) and is adapted to contact said pre-formed opening device (4).

6. The unit of any one of claims 3 to 5, **characterized in that** said sonotrode (81) comprises a sealing surface (89) adapted to cooperate with said web (3) in order to seal said pre-formed opening device (4) to said web (3);
said sealing surface (89) comprising, on the opposite side of said cavity (90), an annular protrusion (96) adapted to exert a pressure on said web (3) in an area surrounding said hole (2), when said sonotrode (81) is in said operative position.

7. The unit of any one of claims 1 to 6, **characterized by** comprising:
- a feeding device (25) comprising an outlet (48) for feeding said opening device (4) to said application station (15); and
- at least one positioning device (50), which is movable between a withdraw position in which it withdraws said pre-formed opening device (4) from said feeding device (25) and a positioning position, in which it is aligned with said hole (2).

8. The unit of claim 7, **characterized in that** said positioning device (50) comprises:
- a housing (51) which can rotate about a third axis (F) parallel to said path (P); and
- a gripping device (52, 54) adapted to grip said pre-formed opening device (4) and which is movable with respect to said housing (51) along a fourth axis (E) transversal to said third axis (F);
said housing (51) being arranged parallel to said second direction (Y), when said positioning device (50) is in said withdraw position;
said housing (51) being arranged parallel to said first direction (Z), when said positioning device (50) is in said positioning position;
said gripping device (52, 54) being movable with respect to said housing (51) and along said fourth axis (E) between a partially extended position and a retracted position when said positioning device (50) is in said withdraw position, so as to withdraw said opening device (4) from said outlet (48) of said feeding device (25);
said gripping device (52, 54) being movable with respect to said housing (51) and along said second axis (E) between said retracted position and a fully extended position when said positioning device (50) is in said positioning position, so as to insert said opening device (4) into said hole (2) of said web (3).

9. The unit of claim 8, **characterized in that** said anvil (82) and a stationary part (80) of said unit (1) define a passage (79) for said gripping device (52, 54) of said positioning device (50), when the latter is, in use, in said in the positioning position and said anvil (82) is, in use, in the rest position;
said anvil (82) closing said passage (79), when set, in use, in said operative position;
said anvil (82) and said positioning device (50) being synchronized in such a way that when said anvil (82) is in said rest position, said positioning device (51) is, in use, in said positioning position and said gripping device (52, 54) is moved, in use, from said retracted position to said fully extended position, so as to pass through said passage (79) and insert said opening device (4) inside said hole (2).

10. The unit of claim 8 or 9, **characterized in that** said feeding device (25) comprises an expulsing device (30), which is arranged on the opposite side of said outlet (48) and is adapted, in use, to thrust said pre-formed opening device (4) towards said positioning device (50);
said expulsing device (30) and said positioning device (50) being synchronized in such a way that when said expulsing device (30) thrusts, in use, said pre-formed opening device (4), said positioning device (50) is in said withdrawing position and said gripping device (52, 54) moves, in use, from said partially extended position to said retracted position.

11. The unit of any one of foregoing claims, **characterized in that** said advancing means (10) are controlled to stepwise advance, in use, said web (3) along said path (P);
said advancing means (10) being adapted to stop said web (3) when said application station (15) applies said pre-formed opening device (4) and to advance said web (3) before and after the application of said pre-formed opening device (4).

12. A method for applying at least one pre-formed opening device (4) onto a hole (2) of a web (3) of a packaging material, comprising the steps of:
i) advancing said web (3) along a path (P); and
ii) ultrasonically sealing said pre-formed opening device (4) on said web (3) at said hole (2),
**characterized in that** said step ii) comprises the steps of:
iii) moving a sonotrode (81) along a first direction (Z), and between a first rest position in which it is spaced apart from said web (3) and a first operative position in which it cooperates with a first side (3a) of said web (3) and is activated to seal said pre-formed opening device (4) to said web (3); and
iv) moving an anvil (82) along a second direction (Y) transversal to said first direction (Z), and between a second rest position in which it is spaced apart from said web (3) and a second operative position in which it exerts a counter-pressure against a second side (3b), opposite to said first side (3a), of said web (3) at said hole (2).

13. The method of claim 12, **characterized in that** said sonotrode (81) and said anvil (82) reach at the same time said first operative position and said second operative position.

14. The method of claim 12 or 13, **characterized by** comprising the steps of:
v) feeding said pre-formed opening device (4) to an outlet (48) of a feeding device (25);
vi) withdrawing said pre-formed opening device (4) from said outlet (48); and
vii) positioning said pre-formed opening device (4) inside said hole (2) of said web (3), when said sonotrode (81) and said anvil (82) are in respective said first rest position and second rest position;
said step vi) and vii) being carried out by the same positioning device (50).

## Patentansprüche

1. Einheit (1) zum Aufbringen von mindestens einer vorgebildeten Öffnungsvorrichtung (4) auf ein Loch (2) einer Bahn (3) eines Verpackungsmaterials, umfassend:
- Vorrückmittel (10) zum Vorrücken der Bahn (3) entlang eines Pfads (P); und
- mindestens eine Aufbringungsstation (15), in die bei Gebrauch die vorgebildete Öffnungsvorrichtung (4) eingespeist wird und die bei Gebrauch die vorgebildete Öffnungsvorrichtung (4) auf das Loch (2) der Bahn (3) aus Verpackungsmaterial siegelt, wobei die Aufbringungsstation (15) umfasst:
∘ eine Sonotrode (81), die aktiviert werden kann, um das Siegeln der vorgebildeten Öffnungsvorrichtung (4) an der Bahn (3) aus Verpackungsmaterial zu bewirken; und
∘ einen Amboss (82), der vorgesehen ist, um während des Siegelns der vorgebildeten Öffnungsvorrichtung (4) an die Bahn (3) mit der vorgebildeten Öffnungsvorrichtung (4) auf der Gegenseite der Sonotrode (81) in Bezug auf die Bahn (3) zusammenzuwirken,
**dadurch gekennzeichnet, dass**
- die Sonotrode (81) entlang einer ersten Richtung (Z) zwischen
∘ einer ersten Ruheposition, in der sie von der Bahn (3) beabstandet ist; und
∘ einer ersten Betriebsposition beweglich ist, in der sie mit einer ersten Seite (3b) der Bahn (3) an dem Loch (2) zusammenwirkt, und in der sie aktiviert wird, um das Siegeln der vorgebildeten Öffnungsvorrichtung (4) zu bewirken;
- der Amboss (82) entlang einer zweiten Richtung (Y) quer zu der ersten Richtung (Z) zwischen
∘ einer zweiten Ruheposition, in der er von der Bahn (3) beabstandet ist; und
∘ einer zweiten Betriebsposition beweglich ist, in der er einen Gegendruck gegen eine zweite Seite (3a) ausübt, die der ersten Seite (3b) der Bahn (3) an dem Loch (2) gegenüber liegt; und
- die Sonotrode (81) und der Amboss (82) bei Gebrauch zur gleichen Zeit in jeweils den zweiten Betriebspositionen angeordnet sind, um so die vorgebildete Öffnungsvorrichtung (4) an die Bahn (3) zu siegeln.

2. Einheit nach Anspruch 1, **dadurch gekennzeichnet, dass** die erste Richtung (Z) und die zweite Richtung (Y) quer zueinander und zu dem Pfad (P) sind.

3. Einheit nach Anspruch 1 oder 2, **dadurch gekennzeichnet, dass** der Amboss (82), wenn er in der zweiten Betriebsposition angeordnet ist, bei Gebrauch mit einem Flansch (5) der vorgebildeten Vorrichtung (4) zusammenwirkt; und dass die Sonotrode (81) einen Endhohlraum (90) umfasst, um bei Gebrauch einen Halsanteil (6) der vorgebildeten Öffnungsvorrichtung (4) aufzunehmen, wenn die Sonotrode (81) in der jeweiligen Betriebsposition ist;
der Halsanteil (6) aus dem Flansch (5) hervorragt und bei Gebrauch das Loch (2) der Bahn (3) durchläuft;
der Hohlraum (90) in Richtung der Bahn (3) offen ist und durch eine Öffnung (88) begrenzt wird.

4. Einheit nach Anspruch 3, **dadurch gekennzeichnet, dass** die Sonotrode (81) einen Ring (91) aus Elastomermaterial umfasst, der teilweise in den Hohlraum (90) hervorragt und vorgesehen ist, um mit dem Halsanteil (6) der vorgebildeten Öffnungsvorrichtung (4) zusammenzuwirken, um so eine erste Achse (A) der vorgebildeten Öffnungsvorrichtung (4) in Bezug auf eine zweite Achse (B) des Hohlraums (90) zu zentrieren.

5. Einheit nach Anspruch 4, **dadurch gekennzeichnet, dass** der Ring (91) auf der Seite der zweiten Achse (B) eine Wand (92) umfasst, die sich auf der Gegenseite der Öffnung (88) verjüngt und zum Kontaktieren der vorgebildeten Öffnungsvorrichtung (4) vorgesehen ist.

6. Einheit nach einem der Ansprüche 3 bis 5, **dadurch gekennzeichnet, dass** die Sonotrode (81) eine Siegelfläche (89) umfasst, die zum Zusammenwirken mit der Bahn (3) vorgesehen ist, um die vorgebildete Öffnungsvorrichtung (4) an die Bahn (3) zu siegeln;
die Siegelfläche (89) auf der Gegenseite des Hohlraums (90) einen ringförmigen Vorsprung (96) umfasst, der vorgesehen ist, um in einem Bereich, der das Loch (2) umgibt, einen Druck auf die Bahn (3) auszuüben, wenn sich die Sonotrode (81) in der Betriebsposition befindet.

7. Einheit nach einem der Ansprüche 1 bis 6, **dadurch gekennzeichnet, dass** sie umfasst:
- eine Einspeisevorrichtung (25), die einen Auslass (48) zum Einspeisen der Öffnungsvorrichtung (4) in die Aufbringungsstation (15) umfasst; und
- mindestens eine Positioniervorrichtung (50), die zwischen einer Entnahmeposition, in der sie die vorgebildete Öffnungsposition (4) aus der Einspeisevorrichtung (25) entnimmt, und einer Positionierposition beweglich ist, in der sie mit dem Loch (2) ausgerichtet ist.

8. Einheit nach Anspruch 7, **dadurch gekennzeichnet, dass** die Positioniervorrichtung (50) umfasst:
- ein Gehäuse (51), das um eine dritte Achse (F) parallel zu dem Pfad (P) rotieren kann; und
- eine Greifvorrichtung (52, 54), die vorgesehen ist, um die vorgebildete Öffnungsvorrichtung (4) zu greifen, und die in Bezug auf das Gehäuse (51) entlang einer vierten Achse (E) quer zu der dritten Achse (F) beweglich ist;
das Gehäuse (51) parallel zu der zweiten Richtung (Y) angeordnet ist, wenn sich die Positioniervorrichtung (50) in der Entnahmeposition befindet; das Gehäuse (51) parallel zu der ersten Richtung (Z) angeordnet ist, wenn sich die Positioniervorrichtung (50) in der Positionierposition befindet;
die Greifvorrichtung (52, 54) in Bezug auf das Gehäuse (51) und entlang der vierten Achse (E) zwischen einer teilweise ausgezogenen Position und einer rückgezogenen Position beweglich ist, wenn die Positioniervorrichtung (50) in der Entnahmeposition ist, um so die Öffnungsvorrichtung (4) aus dem Auslass (48) der Einspeisevorrichtung (25) zu entnehmen;
die Greifvorrichtung (52, 54) in Bezug auf das Gehäuse (51) und entlang der zweiten Achse (E) zwischen der rückgezogenen Position und einer vollständig ausgefahrenen Position beweglich ist, wenn die Positioniervorrichtung (50) in der Positionierposition ist, um so die Öffnungsvorrichtung (4) in das Loch (2) der Bahn (3) einzusetzen.

9. Einheit nach Anspruch 8, **dadurch gekennzeichnet, dass** der Amboss (82) und ein stationäres Teil (80) der Einheit (1) einen Durchgang (79) für die Greifvorrichtung (52, 54) der Positioniervorrichtung (50) definieren, wenn letztere in der Positionierposition in Gebrauch ist, und der Amboss (82) in Gebrauch in der Ruheposition ist; der Amboss (82) den Durchgang (79) schließt, wenn er in Gebrauch in seine Betriebsposition gesetzt worden ist;
der Amboss (82) und die Positioniervorrichtung (50) in einer solchen Weise synchronisiert werden, dass die Positioniervorrichtung (51), wenn der Amboss (82) in der Ruheposition ist, in Gebrauch in der Positionierposition ist, und die Greifvorrichtung (52, 54) in Gebrauch aus der rückgezogenen Position zu der vollständig ausgefahrenen Position bewegt wird, um so den Durchgang (79) zu durchlaufen und die Öffnungsvorrichtung (4) in das Loch (2) einzusetzen.

10. Einheit nach Anspruch 8 oder 9, **dadurch gekennzeichnet, dass** die Einspeisevorrichtung (25) eine Auswerfvorrichtung (30) umfasst, die auf der entgegengesetzten Seite des Auslasses (48) angeordnet ist und vorgesehen ist, um bei Gebrauch die vorgebildete Öffnungsvorrichtung (4) in Richtung der Positioniervorrichtung (50) zu stoßen;
die Auswerfvorrichtung (30) und die Positioniervorrichtung (50) in einer solchen Weise synchronisiert werden, dass die Auswerfvorrichtung (30) bei Gebrauch die vorgebildete Öffnungsvorrichtung (4) stößt, wobei die Positioniervorrichtung (50) in der Entnahmeposition ist und die Greifvorrichtung (52, 54) sich bei Gebrauch von der teilweise ausgezogenen Position in die rückgezogene Position bewegt.

11. Einheit nach einem der vorhergehenden Ansprüche, **dadurch gekennzeichnet, dass** das Vorrückmittel (10) gesteuert wird, um die Bahn (3) bei Gebrauch entlang des Pfades (P) schrittweise vorzurücken; das Vorrückmittel (10) vorgesehen ist, um die Bahn (3) zu stoppen, wenn die Aufbringungsstation (15) die vorgebildete Öffnungsvorrichtung (4) aufbringt und die Bahn (3) vor und nach der Aufbringung der vorgebildeten Öffnungsvorrichtung (4) vorrückt.

12. Verfahren zum Aufbringen von mindestens einer vorgeformten Öffnungsvorrichtung (4) auf ein Loch (2) einer Bahn (3) eines Verpackungsmaterials, umfassend die Schritte:
i) Vorrücken der Bahn (3) entlang eines Pfads (P); und
ii) Siegeln der vorgebildeten Öffnungsvorrichtung (4) an die Bahn (3) an dem Loch (2) mittels Ultraschall,
**dadurch gekennzeichnet, dass** der Schritt ii) die Schritte umfasst:
iii) Bewegen einer Sonotrode (81) entlang einer ersten Richtung (Z) und zwischen einer ersten Ruheposition, in der sie von der Bahn (3) beabstandet ist, und einer ersten Betriebsposition, in der sie mit einer ersten Seite (3a) der Bahn (3) zusammenwirkt und aktiviert ist, um die vorgebildete Öffnungsvorrichtung (4) an die Bahn (3) zu siegeln; und
iv) Bewegen eines Ambosses (82) entlang einer zweiten Richtung (Y) quer zu der ersten Richtung (Z) und zwischen einer zweiten Ruheposition, in der er von der Bahn (3) beabstandet ist, und einer zweiten Betriebsposition, in der er einen Gegendruck gegen eine zweite Seite (3b), die der ersten Seite (3a) gegenüber liegt, der Bahn (3) an dem Loch (2) ausübt.

13. Verfahren nach Anspruch 12, **dadurch gekennzeichnet, dass** die Sonotrode (81) und der Amboss (82) gleichzeitig die erste Betriebsposition und die zweite Betriebsposition erreichen.

14. Verfahren nach Anspruch 12 oder 13, **dadurch gekennzeichnet, dass** es die Schritte umfasst:
v) Einspeisen der vorgebildeten Öffnungsvorrichtung (4) an einen Auslass (48) der Einspeisevorrichtung (25);
vi) Entnehmen der vorgebildeten Öffnungsvorrichtung (4) aus dem Auslass (48); und
vii) Positionieren der vorgebildeten Öffnungsvorrichtung (4) innerhalb des Lochs (2) der Bahn (3), wenn die Sonotrode (81) und der Amboss (82) in der ersten Ruheposition beziehungsweise der zweiten Ruheposition sind;
wobei der Schritt vi) und vii) durch dieselbe Positioniervorrichtung (50) durchgeführt werden.

## Revendications

1. Unité (1) destinée à appliquer au moins un dispositif d'ouverture préformé (4) sur un orifice (2) d'une bande (3) d'un matériau d'emballage, comprenant :
des moyens d'avance (10) permettant de faire avancer ladite bande (3) le long d'une trajectoire (P) ; et
au moins un poste d'application (15), qui est alimenté, lors de l'utilisation, avec ledit dispositif d'ouverture préformé (4) et scelle, lors de l'utilisation, ledit dispositif d'ouverture préformé (4) sur ledit orifice (2) de ladite bande (3) de matériau d'emballage, ledit poste d'application (15) comprenant :
une sonotrode (81) qui peut être activée pour provoquer le scellement dudit dispositif d'ouverture préformé (4) à ladite bande (3) de matériau d'emballage ; et
une enclume (82), conçue pour coopérer avec ledit dispositif d'ouverture préformé (4), du côté opposé de ladite sonotrode (81) par rapport à ladite bande (3), pendant le scellement dudit dispositif d'ouverture préformé (4) à ladite bande (3),
l'unité étant **caractérisée en ce que** :
ladite sonotrode (81) est mobile le long d'une première direction (Z) entre :
une première position de repos, dans laquelle elle est espacée de ladite bande (3) ; et
une première position fonctionnelle, dans laquelle elle coopère avec un premier côté (3b) de ladite bande (3) au niveau dudit orifice (2), et dans laquelle elle est activée pour provoquer le scellement dudit dispositif d'ouverture préformé (4) ;
ladite enclume (82) est mobile le long d'une seconde direction (Y) transversalement à ladite première direction (Z) entre :
une seconde position de repos, dans laquelle elle est espacée de ladite bande (3) ; et
une seconde position fonctionnelle, dans laquelle elle exerce une contre-pression contre un second côté (3a), opposé audit premier côté (3b), de ladite bande (3) au niveau dudit orifice (2) ; et
ladite sonotrode (81) et ladite enclume (82) sont disposées, lors de l'utilisation, en même temps, dans lesdites secondes positions fonctionnelles respectives, de manière à sceller ledit dispositif d'ouverture préformé (4) à ladite bande (3).

2. Unité selon la revendication 1, **caractérisée en ce que** lesdites première direction (Z) et seconde direction (Y) sont transversales l'une par rapport à l'autre et par rapport à ladite trajectoire (P).

3. Unité selon la revendication 1 ou 2, **caractérisée en ce que** ladite enclume (82), lorsqu'elle est disposée dans ladite seconde position fonctionnelle, coopère, lors de l'utilisation, avec un bord (5) dudit dispositif préformé (4) ; et **en ce que** ladite sonotrode (81) comprend une cavité extrême (90) pour recevoir, lors de l'utilisation, une partie cou (6) dudit dispositif d'ouverture préformé (4) quand ladite sonotrode (81) est dans ladite position fonctionnelle respective ;
ladite partie cou (6) faisant saillie par rapport audit bord (5) et passant, lors de l'utilisation, dans ledit orifice (2) de ladite bande (3) ;
ladite cavité (90) étant ouverte vers ladite bande (3) et étant liée par une ouverture (88).

4. Unité selon la revendication 3, **caractérisée en ce que** ladite sonotrode (81) comprend un anneau (91) de matériau élastomère, faisant en partie saillie dans ladite cavité (90), et conçu pour coopérer avec ladite partie cou (6) dudit dispositif d'ouverture préformé (4), de manière à centrer un premier axe (A) dudit dispositif d'ouverture préformé (4) par rapport à un deuxième axe (B) de ladite cavité (90).

5. Unité selon la revendication 4, **caractérisée en ce que** ledit anneau (91) comprend, du côté dudit deuxième axe (B), une paroi (92) dont la section décroît du côté opposé de ladite ouverture (88) et qui est conçue pour entrer en contact avec ledit dispositif d'ouverture préformé (4).

6. Unité selon l'une quelconque des revendications 3 à 5, **caractérisée en ce que** ladite sonotrode (81) comprend une surface de scellement (89) conçue pour coopérer avec ladite bande (3) afin de sceller ledit dispositif d'ouverture préformé (4) à ladite bande (3) ;
ladite surface de scellement (89) comprenant, du côté opposé de ladite cavité (90), une protubérance annulaire (96) conçue pour exercer une pression sur ladite bande (3) dans une région entourant ledit orifice (2), quand ladite sonotrode (81) est dans ladite position fonctionnelle.

7. Unité selon l'une quelconque des revendications 1 à 6, **caractérisée en ce qu'**elle comprend :
un dispositif d'alimentation (25) comprenant une sortie (48) pour alimenter ledit poste d'application (15) avec ledit dispositif d'ouverture (4) ; et
au moins un dispositif de positionnement (50), mobile entre une position de retrait, dans laquelle il retire ledit dispositif d'ouverture préformé (4) dudit dispositif d'alimentation (25), et une position de positionnement, dans laquelle il est aligné avec ledit orifice (2).

8. Unité selon la revendication 7, **caractérisée en ce que** ledit dispositif de positionnement (50) comprend :
un boîtier (51) qui peut tourner autour d'un troisième axe (F) parallèle à ladite trajectoire (P) ; et
un dispositif de saisie (52, 54) conçu pour saisir ledit dispositif d'ouverture préformé (4) et mobile par rapport audit boîtier (51) le long d'un quatrième axe (E) transversal audit troisième axe (F) ;
ledit boîtier (51) étant disposé parallèlement à ladite seconde direction (Y), quand ledit dispositif de positionnement (50) est dans ladite position de retrait ;
ledit boîtier (51) étant disposé parallèlement à ladite première direction (Z), quand ledit dispositif de positionnement (50) est dans ladite position de positionnement ;
ledit dispositif de saisie (52, 54) étant mobile par rapport audit boîtier (51) et le long dudit quatrième axe (E) entre une position partiellement étendue et une position rétractée quand ledit dispositif de positionnement (50) est dans ladite position de retrait, de manière à retirer ledit dispositif d'ouverture (4) de ladite sortie (48) dudit dispositif d'alimentation (25) ;
ledit dispositif de saisie (52, 54) étant mobile par rapport audit boîtier (51) et le long dudit deuxième axe (E) entre ladite position rétractée et une position totalement étendue quand ledit dispositif de positionnement (50) est dans ladite position de positionnement, de manière à insérer ledit dispositif d'ouverture (4) dans ledit orifice (2) de ladite bande (3).

9. Unité selon la revendication 8, **caractérisée en ce que** ladite enclume (82) et une partie fixe (80) de ladite unité (1) définissent un passage (79) pour ledit dispositif de saisie (52, 54) dudit dispositif de positionnement (50), quand ce dernier est, lors de l'utilisation, dans ladite position de positionnement et ladite enclume (82) est, lors de l'utilisation, dans la position de repos ;
ladite enclume (82) fermant ledit passage (79), lorsqu'elle se trouve, lors de l'utilisation, dans ladite position fonctionnelle ;
ladite enclume (82) et ledit dispositif de positionnement (50) étant synchronisés de sorte que lorsque ladite enclume (82) est dans ladite position de repos, ledit dispositif de positionnement (51) est, lors de l'utilisation, dans ladite position de positionnement et ledit dispositif de saisie (52, 54) est déplacé, lors de l'utilisation, de ladite position rétractée à ladite position totalement étendue, de manière à passer dans ledit passage (79) et insérer ledit dispositif d'ouverture (4) à l'intérieur dudit orifice (2).

10. Unité selon la revendication 8 ou 9, **caractérisée en ce que** ledit dispositif d'alimentation (25) comprend un dispositif d'expulsion (30), disposé du côté opposé de ladite sortie (48) et conçu, lors de l'utilisation, pour pousser ledit dispositif d'ouverture préformé (4) vers ledit dispositif de positionnement (50) ;
ledit dispositif d'expulsion (30) et ledit dispositif de positionnement (50) étant synchronisés de sorte que lorsque ledit dispositif d'expulsion (30) pousse, lors de l'utilisation, ledit dispositif d'ouverture préformé (4), ledit dispositif de positionnement (50) est dans ladite position de retrait et ledit dispositif de saisie (52, 54) se déplace, lors de l'utilisation, de ladite position partiellement étendue à ladite position rétractée.

11. Unité selon l'une quelconque des revendications précédentes, **caractérisée en ce que** lesdits moyens d'avance (10) sont contrôlés pour faire avancer pas à pas, lors de l'utilisation, ladite bande (3) le long de ladite trajectoire (P) ;
lesdits moyens d'avance (10) étant conçus pour arrêter ladite bande (3) quand ledit poste d'application (15) applique ledit dispositif d'ouverture préformé (4) et pour faire avancer ladite bande (3) avant et après l'application dudit dispositif d'ouverture préformé (4).

12. Procédé d'application d'au moins un dispositif d'ouverture préformé (4) sur un orifice (2) d'une bande (3) d'un matériau d'emballage, le procédé comprenant les étapes consistant à :
i) faire avancer ladite bande (3) le long d'une trajectoire (P) ; et
ii) sceller par ultrasons ledit dispositif d'ouverture préformé (4) sur ladite bande (3) au niveau dudit orifice (2),
le procédé étant **caractérisé en ce que** ladite étape ii) comprend les étapes consistant à :
iii) déplacer une sonotrode (81) le long d'une première direction (Z), et entre une première position de repos, dans laquelle elle est espacée de ladite bande (3), et une première position fonctionnelle, dans laquelle elle coopère avec un premier côté (3a) de ladite bande (3) et est activée pour sceller ledit dispositif d'ouverture préformé (4) à ladite bande (3) ; et
iv) déplacer une enclume (82) le long d'une seconde direction (Y) transversale à ladite première direction (Z), et entre une seconde position de repos, dans laquelle elle est espacée de ladite bande (3), et une seconde position fonctionnelle, dans laquelle elle exerce une contre-pression contre un second côté (3b), opposé audit premier côté (3a), de ladite bande (3) au niveau dudit orifice (2).

13. Procédé selon la revendication 12, **caractérisé en ce que** ladite sonotrode (81) et ladite enclume (82) atteignent en même temps ladite première position fonctionnelle et ladite seconde position fonctionnelle.

14. Procédé selon la revendication 12 ou 13, **caractérisé en ce qu'**il comprend les étapes consistant à :
v) amener ledit dispositif d'ouverture préformé (4) vers une sortie (48) d'un dispositif d'alimentation (25) ;
vi) retirer ledit dispositif d'ouverture préformé (4) de ladite sortie (48) ; et
vii) positionner ledit dispositif d'ouverture préformé (4) à l'intérieur dudit orifice (2) de ladite bande (3), quand ladite sonotrode (81) et ladite enclume (82) sont dans lesdites première position de repos et seconde position de repos respectives ;
lesdites étapes vi) et vii) étant réalisées par le même dispositif de positionnement (50).
